# EUROPEAN PATENT APPLICATION

(11) **EP 4 768 745 A1**
(43) Date of publication of application: **01.07.2026**
(21) Application number: 25221303.8
(22) Date of filing: 05.12.2025
(51) Int. Cl.: F16C 33/78, F16C 33/80, F16J 15/3232, F16J 15/3268, F16J 15/3284, F16C 33/76

(54) **COMBINED TYPE SEALING RING OF HUB BEARING AND MACHINING METHOD THEREOF**

(30) Priority: 11.12.2024 CN 202411816650
(71) Applicant: C&U Company Limited., Wenzhou, Zhejiang Province (CN); Shanghai C&U Group Co., Ltd., Shanghai (CN)
(72) Inventor: HU, Sheng, Shanghai (CN); HU, Shixiong, Shanghai (CN); BAI, Xuefeng, Shanghai (CN)
(74) Representative: Chung, Hoi Kan

(57) **Abstract**

The present disclosure discloses a combined type sealing ring of a hub bearing and a machining method thereof. The sealing ring comprises a first skeleton, a second skeleton, and a third skeleton, the first skeleton comprises a first connecting portion and a first sealing portion disposed horizontally, the first sealing portion is provided with a sealing lip, the second skeleton comprises a second connecting portion and a second sealing portion extending toward an outer diameter surface of a transmission shaft, the third skeleton comprises a third connecting portion and a third sealing portion, one end of the third connecting portion is fixedly connected to the third sealing portion, the other end of the third connecting portion and an end of the second connecting portion are welded, and a clearance groove is formed between the third sealing portion and the first sealing portion; cold welding is adopted in a welding process to weld connecting positions of the second connecting portion and the third connecting portion, a welder current is set to 3-50 A, a pulse interval is 20-50 ms, and a welding speed is 300-800 mm/min; and a temperature at a welding position is controlled at 50-100°C for 30 min after completion of welding. It is simple in structure and controllable in amount of deformation, ensures stable operations of the structure, and has a good using effect.

## Description

### TECHNICAL FIELD

The present disclosure relates to a combined type sealing ring of a hub bearing and a machining method thereof.

### BACKGROUND

CN206845714U and CN113847349A respectively disclose an outside combined sealing ring of a hub bearing, a skeleton of which needs more space in a 360° reverse bending process, and a certain bending angle needs to be formed after 360° bending of the skeleton to guarantee that deformation of the skeleton is controllable, a contact state of a sealing lip is not affected, and the sealing moment and sealing performance are guaranteed. However, this type of sealing structure cannot effectively prevent the impact of mud and flying stones on joints of end face tooth parts of an end face spline hub bearing in a traveling process of a vehicle, and an additional sealing structure needs to be added, which results in an overly complex structure and cumbersome assembling, and thus affects the using effect of the structure.

### SUMMARY

In view of the shortcomings of the prior art, the present disclosure provides a combined type sealing ring of a hub bearing and a machining method thereof, which is simple in structure, can be controlled in amount of deformation, ensures stable operations of the structure, and at the same time, is convenient to machine and reliable in connection, and has a good using effect.

To achieve the above objects, the present disclosure provides a combined type sealing ring of a hub bearing, including a first skeleton mated with an outer ring, and a second skeleton and a third skeleton which are used for being mated with an inner ring, the first skeleton includes a first connecting portion and a first sealing portion disposed horizontally, the first sealing portion is provided with a sealing lip, the second skeleton includes a second connecting portion attached to the inner ring and a second sealing portion extending toward an outer diameter surface of a transmission shaft, the third skeleton includes a third connecting portion and a third sealing portion, one end of the third connecting portion is fixedly connected to the third sealing portion, the other end of the third connecting portion and an end of the second connecting portion are welded, and a clearance groove is formed between the third sealing portion and the first sealing portion.

Such arrangements have the following beneficial effects: by means of such arrangements, the second skeleton and the third skeleton are in a split form, so that the machining difficulty of metal skeletons is reduced; at the same time, both are formed by adopting a welding molding manner, so that uncontrollable deformation caused by direct bending of the metal skeletons is avoided, and the welding manner also strengthens the connection strength between the skeletons; and at the same time, the third skeleton is effectively extended outward to form a shield against the outer diameter surface of the transmission shaft and the position of a spline, so that components are better integrated, the overall consistency is strong while the performance of sealing pieces is ensured, it is convenient for factory production, management and installation, and the structure of a small inner ring in an original structure is further simplified, the manufacturing and machining are facilitated, and the manufacturing and machining efficiency is improved.

As a further arrangement of the present disclosure, one end of the third sealing portion that is connected to the third connecting portion is connected to the second connecting portion through spot welding.

Such arrangements have the following beneficial effects: by means of such arrangements, the connection stability of the second skeleton and the third skeleton is further ensured, and the uncontrollable deformation of the metal skeletons caused by direct bending is avoided; and at the same time, the welding manner strengthens the connection strength between the skeletons, and the service life of the structure is extended.

As a further arrangement of the present disclosure, a hydrophobic edge is formed on a free end of the third sealing portion in a bent manner, the hydrophobic edge is in parallel with the first connecting portion, and a hydrophobic channel is formed between the hydrophobic edge and the first connecting portion.

Such arrangements have the following beneficial effects: by means of such arrangements, the hydrophobic effect is further improved, the ingress of external liquid is prevented, and the reliability of use of the structure is improved.

As a further arrangement of the present disclosure, an arc-shaped groove is formed on the first sealing portion in a bent manner, and the hydrophobic edge of the third sealing portion extends into the arc-shaped groove.

Such arrangements have the following beneficial effects: by means of such arrangements, the difficulty of outside materials entering the bearing is further increased, and the stability of use of the structure is improved; and at the same time, it is simple in structure, convenient to machine, and reliable in use.

As a further arrangement of the present disclosure, the sealing lip includes a first lip body, a second lip body, and a third lip body, the first lip body is disposed at a position corresponding to the arc-shaped groove and extends toward the hydrophobic edge, the second lip body and the third lip body are both disposed at an edge of the first sealing portion, the second lip body extends toward the third sealing portion, and the third lip body extends toward the third connecting portion.

Such arrangements have the following beneficial effects: by means of such arrangements, the sealing lip in a form of a labyrinth is increased, so that the sealing effect of the structure is effectively improved, a good hydrophobic effect is achieved, and the reliability of use of the structure is effectively improved.

As a further arrangement of the present disclosure, an outer wall of the third sealing portion is provided with a retaining lip.

Such arrangements have the following beneficial effects: by means of such arrangements, the sealing effect of the structure is further improved; and at the same time, it is simple in structure, is helpful for realization, and has a good using effect.

As a further arrangement of the present disclosure, the second connecting portion is disposed in a bent manner.

Such arrangements have the following beneficial effects: by means of such arrangements, the use of hub bearings of different specifications can be met, attachment to an outer wall of the inner ring can be guaranteed, and the assembly stability of the structure is improved.

The present disclosure further discloses a machining method of a combined type sealing ring of a hub bearing, including the following steps: applying cold welding to connecting positions of a second connecting portion and a third connecting portion using a cold welding device, where a welder current is set to 3-50 A, a pulse interval is 20-50 ms, and a welding speed is 300-800 mm/min; and controlling a temperature at a welding position at 50-100°C for 30 min after completion of welding.

Further, the method also includes: adopting argon gas protection, filling no filler wires during welding.

Such arrangements have the following beneficial effects: by means of such arrangements, deformation is small due to the adoption of cold welding, the cost is low, and control is easy; yet argon arc welding is adopted, the temperature of argon arc welding is high, the deformation is large, and plates are prone to being broken down; by means of this structure and process, it is possible to effectively shield end face splines of the hub bearing to form a combined application, and water ingress at the spline position is avoided; and by reducing a closed structure at a position of the small inner ring, one component is eliminated, the production and machining efficiency can be improved, installation can be done in place at once, and the good using effect is achieved.

### BRIEF DESCRIPTION OF THE DRAWINGS

FIG. 1 is a structural schematic diagram of a first embodiment of the present disclosure;
FIG. 2 is a structural schematic diagram of a second embodiment of the present disclosure;
FIG. 3 is a structural schematic diagram of a third embodiment of the present disclosure; and
FIG. 4 is a structural schematic diagram of a fourth embodiment of the present disclosure.

### DETAILED DESCRIPTION OF THE EMBODIMENTS

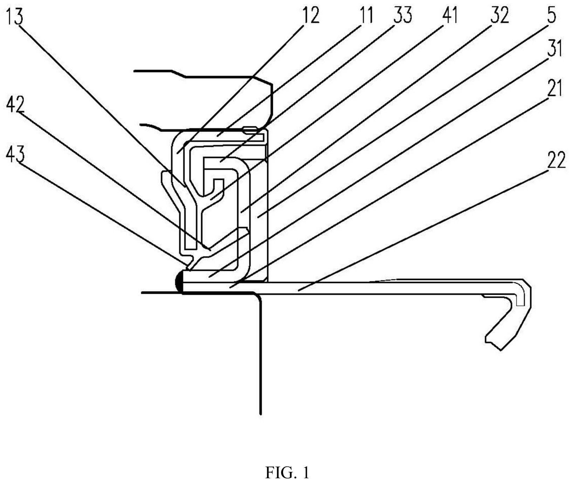

A first implementation of a combined type sealing ring of a hub bearing is as shown in FIG. 1, the combined sealing ring includes a first skeleton mated with an outer ring, and a second skeleton and a third skeleton which are used for being mated with an inner ring, the first skeleton includes a first connecting portion 11 and a first sealing portion 12 disposed horizontally, the first sealing portion 12 is provided with a sealing lip, the second skeleton includes a second connecting portion 21 attached to the inner ring and a second sealing portion 22 extending toward an outer diameter surface of a transmission shaft, the third skeleton includes a third connecting portion 31 and a third sealing portion 32, one end of the third connecting portion 31 is fixedly connected to the third sealing portion 32, the other end of the third connecting portion and an end of the second connecting portion 21 are welded, and a clearance groove is formed between the third sealing portion 32 and the first sealing portion 12. A hydrophobic edge 33 is formed on a free end of the third sealing portion 32 in a bent manner, the hydrophobic edge 33 is in parallel with the first connecting portion 11, and a hydrophobic channel is formed between the hydrophobic edge 33 and the first connecting portion 11. An arc-shaped groove 13 is formed on the first sealing portion 12 in a bent manner, and the hydrophobic edge 33 of the third sealing portion 32 extends into the arc-shaped groove 13. The sealing lip includes a first lip body 41, a second lip body 42, and a third lip body 43, the first lip body 41 is disposed at a position corresponding to the arc-shaped groove 13 and extends toward the hydrophobic edge, the second lip body 42 and the third lip body 43 are both disposed at an edge of the first sealing portion 12, the second lip body 42 extends toward the third sealing portion 32, and the third lip body 43 extends toward the third connecting portion 31. An outer wall of the third sealing portion 32 is provided with a retaining lip 5.

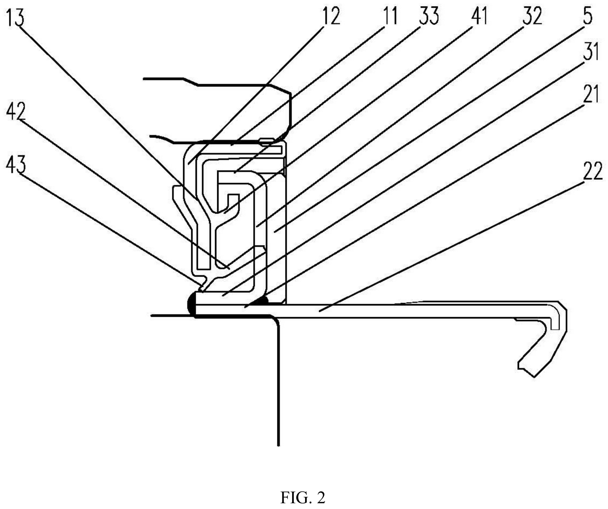

A second implementation of a combined type sealing ring of a hub bearing is as shown in FIG. 2, the combined sealing ring includes a first skeleton mated with an outer ring, and a second skeleton and a third skeleton which are used for being mated with an inner ring, the first skeleton includes a first connecting portion 11 and a first sealing portion 12 disposed horizontally, the first sealing portion 12 is provided with a sealing lip, the second skeleton includes a second connecting portion 21 attached to the inner ring and a second sealing portion 22 extending toward an outer diameter surface of a transmission shaft, the third skeleton includes a third connecting portion 31 and a third sealing portion 32, one end of the third connecting portion 31 is fixedly connected to the third sealing portion 32, the other end of the third connecting portion and an end of the second connecting portion 21 are welded, and a clearance groove is formed between the third sealing portion 32 and the first sealing portion 12. One end of the third sealing portion 32 that is connected to the third connecting portion 31 is connected to the second connecting portion 21 through spot welding. A hydrophobic edge 33 is formed on a free end of the third sealing portion 32 in a bent manner, the hydrophobic edge 33 is in parallel with the first connecting portion 11, and a hydrophobic channel is formed between the hydrophobic edge 33 and the first connecting portion 11. An arc-shaped groove 13 is formed on the first sealing portion 12 in a bent manner, and the hydrophobic edge 33 of the third sealing portion 32 extends into the arc-shaped groove 13. The sealing lip includes a first lip body 41, a second lip body 42, and a third lip body 43, the first lip body 41 is disposed at a position corresponding to the arc-shaped groove 13 and extends toward the hydrophobic edge, the second lip body 42 and the third lip body 43 are both disposed at an edge of the first sealing portion 12, the second lip body 42 extends toward the third sealing portion 32, and the third lip body 43 extends toward the third connecting portion 31. An outer wall of the third sealing portion 32 is provided with a retaining lip 5.

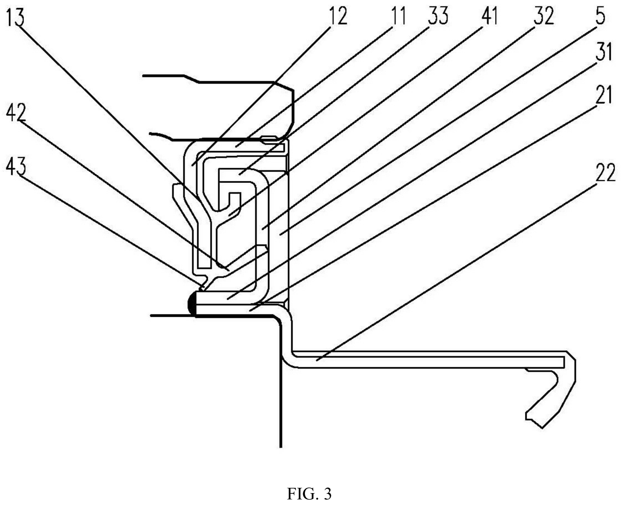

A third implementation of a combined type sealing ring of a hub bearing is as shown in FIG. 3, the combined sealing ring includes a first skeleton mated with an outer ring, and a second skeleton and a third skeleton which are used for being mated with an inner ring, the first skeleton includes a first connecting portion 11 and a first sealing portion 12 disposed horizontally, the first sealing portion 12 is provided with a sealing lip, the second skeleton includes a second connecting portion 21 attached to the inner ring and a second sealing portion 22 extending toward an outer diameter surface of a transmission shaft, the third skeleton includes a third connecting portion 31 and a third sealing portion 32, one end of the third connecting portion 31 is fixedly connected to the third sealing portion 32, the other end of the third connecting portion and an end of the second connecting portion 21 are welded, and a clearance groove is formed between the third sealing portion 32 and the first sealing portion 12. A hydrophobic edge 33 is formed on a free end of the third sealing portion 32 in a bent manner, the hydrophobic edge 33 is in parallel with the first connecting portion 11, and a hydrophobic channel is formed between the hydrophobic edge 33 and the first connecting portion 11. An arc-shaped groove 13 is formed on the first sealing portion 12 in a bent manner, and the hydrophobic edge 33 of the third sealing portion 32 extends into the arc-shaped groove 13. The sealing lip includes a first lip body 41, a second lip body 42, and a third lip body 43, the first lip body 41 is disposed at a position corresponding to the arc-shaped groove 13 and extends toward the hydrophobic edge, the second lip body 42 and the third lip body 43 are both disposed at an edge of the first sealing portion 12, the second lip body 42 extends toward the third sealing portion 32, and the third lip body 43 extends toward the third connecting portion 31. An outer wall of the third sealing portion 32 is provided with a retaining lip 5. The second connecting portion 21 is disposed in a bent manner.

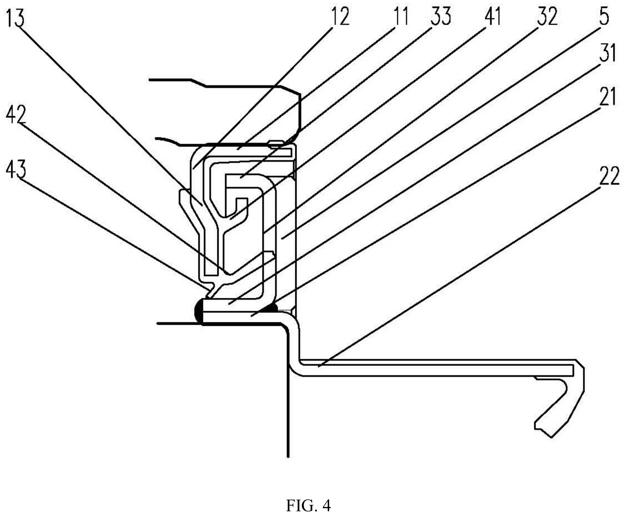

A fourth implementation of a combined type sealing ring of a hub bearing is as shown in FIG. 4, the combined sealing ring includes a first skeleton mated with an outer ring, and a second skeleton and a third skeleton which are used for being mated with an inner ring, the first skeleton includes a first connecting portion 11 and a first sealing portion 12 disposed horizontally, the first sealing portion 12 is provided with a sealing lip, the second skeleton includes a second connecting portion 21 attached to the inner ring and a second sealing portion 22 extending toward an outer diameter surface of a transmission shaft, the third skeleton includes a third connecting portion 31 and a third sealing portion 32, one end of the third connecting portion 31 is fixedly connected to the third sealing portion 32, the other end of the third connecting portion and an end of the second connecting portion 21 are welded, and a clearance groove is formed between the third sealing portion 32 and the first sealing portion 12. One end of the third sealing portion32 that is connected to the third connecting portion 31 is connected to the second connecting portion 21 through spot welding. A hydrophobic edge 33 is formed on a free end of the third sealing portion 32 in a bent manner, the hydrophobic edge 33 is in parallel with the first connecting portion 11, and a hydrophobic channel is formed between the hydrophobic edge 33 and the first connecting portion 11. An arc-shaped groove 13 is formed on the first sealing portion 12 in a bent manner, and the hydrophobic edge 33 of the third sealing portion 32 extends into the arc-shaped groove 13. The sealing lip includes a first lip body 41, a second lip body 42, and a third lip body 43, the first lip body 41 is disposed at a position corresponding to the arc-shaped groove 13 and extends toward the hydrophobic edge, the second lip body 42 and the third lip body 43 are both disposed at an edge of the first sealing portion 12, the second lip body 42 extends toward the third sealing portion 32, and the third lip body 43 extends toward the third connecting portion 31. An outer wall of the third sealing portion 32 is provided with a retaining lip 5. The second connecting portion 21 is disposed in a bent manner.

The implementations further disclose a machining method of a combined type sealing ring of a hub bearing, including the following steps: applying cold welding to connecting positions of a second connecting portion and a third connecting portion using a cold welding device, where a welder current is set to 24 A, a pulse interval is 29 ms, and a welding speed is 460 mm/min; and controlling a temperature at a welding position at 80°C for 30 min after completion of welding.

Further, the method also includes: adopting argon gas protection, filling no filler wires during welding.

Such arrangements have the following beneficial effects: by means of such arrangements, deformation is small due to the adoption of cold welding, the cost is low, and control is easy; yet argon arc welding is adopted, the temperature of argon arc welding is high, the deformation is large, and plates are prone to being broken down; by means of this structure and process, it is possible to effectively shield end face splines of the hub bearing to form a combined application, and water ingress at the spline position is avoided; and by reducing a closed structure at a position of the small inner ring, one component is eliminated, the production and machining efficiency can be improved, installation can be done in place at once, and the good using effect is achieved.

The above examples are only a few of the preferred specific examples of the present disclosure, and usual variations and substitutions made by those skilled in the art within the scope of the technical solution of the present disclosure are included in the scope of protection of the present disclosure.

## Claims

1. A combined type sealing ring of a hub bearing, comprising a first skeleton mated with an outer ring, and a second skeleton and a third skeleton which are used for being mated with an inner ring, wherein the first skeleton comprises a first connecting portion and a first sealing portion disposed horizontally, the first sealing portion is provided with a sealing lip, the second skeleton comprises a second connecting portion attached to the inner ring and a second sealing portion extending toward an outer diameter surface of a transmission shaft, the third skeleton comprises a third connecting portion and a third sealing portion, one end of the third connecting portion is fixedly connected to the third sealing portion, the other end of the third connecting portion and an end of the second connecting portion are welded, a clearance groove is formed between the third sealing portion and the first sealing portion, and one end of the third sealing portion connected to the third connecting portion is connected to the second connecting portion through spot welding.

2. The combined type sealing ring of a hub bearing according to claim 1, wherein a hydrophobic edge is formed on a free end of the third sealing portion in a bent manner, the hydrophobic edge is in parallel with the first connecting portion, and a hydrophobic channel is formed between the hydrophobic edge and the first connecting portion.

3. The combined type sealing ring of a hub bearing according to claim 2, wherein an arc-shaped groove is formed on the first sealing portion in a bent manner, and the hydrophobic edge of the third sealing portion extends into the arc-shaped groove.

4. The combined type sealing ring of a hub bearing according to claim 3, wherein the sealing lip comprises a first lip body, a second lip body, and a third lip body, the first lip body is disposed at a position corresponding to the arc-shaped groove and extends toward the hydrophobic edge, the second lip body and the third lip body are both disposed at an edge of the first sealing portion, the second lip body extends toward the third sealing portion, and the third lip body extends toward the third connecting portion.

5. The combined type sealing ring of a hub bearing according to claim 1, wherein a retaining lip is disposed on an outer wall of the third sealing portion.

6. The combined type sealing ring of a hub bearing according to claim 1, wherein the second connecting portion is disposed in a bent manner.

7. A machining method of a combined type sealing ring of a hub bearing according to any one of claims 1-6, comprising the following steps: applying cold welding to connecting positions of a second connecting portion and a third connecting portion using a cold welding device, wherein a welder current is set to 3-50 A, a pulse interval is 20-50 ms, and a welding speed is 300-800 mm/min; and controlling a temperature at a welding position at 50-100°C for 30 min after completion of welding.

8. The machining method of a combined type sealing ring of a hub bearing according to claim 7, wherein argon gas protection is adopted, and no welding wires are filled during welding.
